# EUROPÄISCHE PATENTSCHRIFT

(11) **EP 1 383 696 B1**
(45) Veröffentlichungstag und Bekanntmachung des Hinweises auf die Patenterteilung: **10.08.2005**
(21) Anmeldenummer: 02732606.5
(22) Anmeldetag: 12.04.2002
(51) Int. Cl.: B65G 49/04, B65G 35/06, B62D 65/00, B05C 3/10

(54) **FÖRDERVORRICHTUNG ZUM FÖRDERN VON WERKSTÜCKEN DURCH EINEN BEHANDLUNGSBEREICH ZUR OBERFLÄCHENBEHANDLUNG DER WERKSTÜCKE**
CONVEYOR DEVICE FOR TRANSPORTING WORKPIECES THROUGH A PROCESSING AREA FOR SURFACE TREATMENT OF SAID WORKPIECES
DISPOSITIF TRANSPORTEUR POUR ACHEMINER DES PIECES D'USINAGE A TRAVERS UNE ZONE DE TRAITEMENT EN VUE DU TRAITEMENT DE SURFACE DESDITES PIECES D'USINAGE

(30) Priorität: 28.04.2001 DE 10121053
(43) Veröffentlichungstag der Anmeldung: 28.01.2004
(73) Patentinhaber: Dürr Systems GmbH, 70435 Stuttgart (DE); Dürr Automation GmbH, 70435 Stuttgart (DE)
(72) Erfinder: KRANNICH, Edmund, 71269 Heimsheim (DE); MOGCK, Gerhard, 74199 Untergruppenbach (DE); ORTLIEB, Konrad, 70186 Stuttgart (DE); SCHMOHL, Andreas, 72636 Frickenhausen (DE); WEEBER, Heinrich, 71706 Markgröningen (DE); WESCHKE, Jürgen, 71263 Weil der Stadt (DE); ZERWECK, Günter, 70825 Korntal-Münchingen (DE)
(74) Vertreter: Hörner, Andreas
(86) Internationale Anmeldenummer: PCT/EP2002/004074
(87) Internationale Veröffentlichungsnummer: WO 2002/088007

(56) Entgegenhaltungen:
- WO-A-01/17691
- US-A- 5 012 917
- US-A- 5 242 045

## Beschreibung

Die vorliegende Erfindung betrifft eine Fördervorrichtung zum Fördern von Werkstücken, insbesondere von Fahrzeugkarosserien, durch einen Behandlungsbereich zur Oberflächenbehandlung der Werkstücke, die einen Förderer umfaßt, der die an jeweils einer Halterung gehaltenen Werkstücke in den Behandlungsbereich einbringt, durch den Behandlungsbereich fördert und aus dem Behandlungsbereich wieder ausbringt.

Eine solche Fördervorrichtung ist aus der DE 196 41 048 A1 bekannt.

Bei dieser bekannten Fördervorrichtung werden Fahrzeugkarosserien lösbar auf jeweils einem Haltergestell angeordnet, das mittels Förderketten längs einer Förderrichtung gefördert wird und das um eine senkrecht zur Förderrichtung ausgerichtete horizontale Achse drehbar ist. Mittels an dem Haltergestell vorgesehener Hebel mit Rollen, die an ortsfesten Leitschienen abrollen, wird das Haltergestell mit der darauf angeordneten Fahrzeugkarosserie während seiner Translationsbewegung längs der Förderrichtung zusätzlich so gedreht, daß die daran angeordnete Fahrzeugkarosserie in ein Behandlungsbad eintaucht, durch das Behandlungsbad gefördert und aus dem Behandlungsbad wieder herausbewegt wird.

Die Förderung der Haltergestelle mittels Förderketten bei der bekannten Fördervorrichtung bringt die Nachteile mit sich, daß ein solcher Kettentrieb sehr wartungsintensiv ist, da beispielsweise die Förderketten geschmiert werden müssen. Ferner sind die Förderketten einem hohen Verschleiß unterworfen, so daß die Förderketten immer wieder ersetzt werden müssen. Tritt an einer Förderkette ein Defekt auf, so muß die gesamte durch die Fördervorrichtung umlaufende Kette aus der Fördervorrichtung entnommen werden. Der Verschleiß der Förderketten steigt noch an, wenn die Förderketten im Behandlungsbereich oder in dessen Nähe aggressiven Dämpfen ausgesetzt sind. Ferner besteht stets die Gefahr, daß der Behandlungsbereich, beispielsweise ein Tauchlackierbecken, durch Kettenabrieb verunreinigt wird.

Der vorliegenden Erfindung liegt daher die Aufgabe zugrunde, eine Fördervorrichtung der eingangs genannten Art zu schaffen, welche weniger wartungsintensiv ist als die bekannten Fördervorrichtungen.

Diese Aufgabe wird bei einer Fördervorrichtung mit den Merkmalen des Oberbegriffs von Anspruch 1 erfindungsgemäß dadurch gelöst, daß die Halterungen jeweils einen sich längs einer Förderrichtung translativ bewegenden Basisteil und einen Drehteil, an welchem das Werkstück angeordnet ist und welcher drehbar an dem Basisteil gehalten ist, umfassen und daß der Förderer mindestens eine Antriebseinrichtung umfaßt, mittels derer jeweils mindestens eine direkt angetriebene Halterung direkt zu einer Bewegung längs der Förderrichtung antreibbar ist, wobei die Bewegung der direkt angetriebenen Halterung durch Kontakt der direkt angetriebenen Halterung mit mindestens einer indirekt angetriebenen Halterung auf die indirekt angetriebene Halterung übertragen wird.

Das erfindungsgemäße Konzept zur Erzeugung der Translationsbewegung der Halterungen längs der Förderrichtung bietet den Vorteil, daß auf ein durch die Fördervorrichtung umlaufendes Förderelement, wie beispielsweise eine Förderkette, verzichtet werden kann. Aufgrund des Verzichts auf ein sich durch die Fördervorrichtung hindurcherstreckendes Förderelement ist die erfindungsgemäße Fördervorrichtung besonders wartungsarm, da die sonst erforderliche Schmierung des Förderelements entfällt. Ferner besteht durch den Wegfall des Förderelements keine Gefahr mehr, daß der Behandlungsbereich, beispielsweise ein Tauchbecken, durch von dem Förderelement stammenden Abrieb verschmutzt wird.

Ferner unterliegt die erfindungsgemäße Fördervorrichtung einem geringeren Verschleiß als eine ein umlaufendes Endlosförderelement verwendende Fördervorrichtung.

Da die Halterungen bei der erfindungsgemäßen Fördervorrichtung nicht an einem umlaufenden Förderelement festgelegt sind, können einzelne Halterungen ohne weiteres aus der Fördervorrichtung entnommen werden, wenn dies für Wartungs- oder Reparaturzwecke erforderlich wird. Die durch die Entnahme einer einzelnen Halterung entstehende Lücke wird dabei umgehend dadurch geschlossen, daß eine in der Förderrichtung hinter der entnommenen Halterung angeordnete Halterung sich auf die in der Förderrichtung vor der entnommenen Halterung angeordnete Halterung zu bewegt, bis die beiden Halterungen miteinander in Kontakt kommen. Im Gegensatz zur Entnahme einer an einem umlaufenden Endlosförderelement festgelegten Halterung entsteht somit keine bleibende Lücke zwischen den durch den Behandlungsbereich geförderten Halterungen.

Ferner können die Halterungen an Lauf- und/oder Führungsschienen geführt werden, die seitlich neben dem Behandlungsbereich in ausreichendem Abstand von demselben angeordnet sind, so daß diese Schienen keinen aggressiven Dämpfen aus dem Behandlungsbereich ausgesetzt sind.

Ferner können die Halterungen der erfindungsgemäßen Fördervorrichtung mit einem verwindungssteifen Rahmen versehen sein, welcher gewährleistet, daß sich die Halterungen während ihrer Bewegung durch den Behandlungsbereich nicht um eine senkrecht zur Förderrichtung ausgerichtete Drehachse verdrehen. Bei der bekannten Fördervorrichtung mit Kettentrieb ist eine solche Verdrehung nicht ausgeschlossen, da die Verbindung der Halterungen mit den Förderketten nicht verwindungssteif ist und bei Verwendung mehrerer Förderketten die Bewegungsgeschwindigkeiten der Förderketten voneinander abweichen können.

Bei einer bevorzugten Ausgestaltung der erfindungsgemäßen Fördervorrichtung ist vorgesehen, daß der Förderer als Schubplattformförderer ausgebildet ist und die Halterungen jeweils als eine Schubplattform ausgebildet sind.

Günstig ist es, wenn der Basisteil der jeweils direkt angetriebenen Halterung mit dem Basisteil der indirekt angetriebenen Halterung in Kontakt steht.

Um zu erreichen, daß die mittels einer Antriebseinrichtung des Förderers überbrückbare Förderstrecke möglichst lang wird, ist vorteilhafterweise vorgesehen, daß die Bewegung der jeweils direkt angetriebenen Halterung auf mindestens zwei indirekt angetriebene Halterungen übertragen wird.

Die direkt angetriebene Halterung und die Mehrzahl von indirekt angetriebenen Halterungen bilden zusammen eine Halterungenreihe, die sich als Einheit längs der Förderrichtung bewegt.

Zur Art der Antriebseinrichtung wurden bislang noch keine näheren Angaben gemacht. Grundsätzlich kommt jede Art von Antrieb in Betracht, welche dazu geeignet ist, die direkt angetriebene Halterung in Bewegung längs der Förderrichtung zu versetzen.

Bei einer bevorzugten Ausgestaltung der Erfindung ist vorgesehen, daß die Antriebseinrichtung einen Reibradantrieb umfaßt.

Um zu erreichen, daß die Halterungen einer Halterungenreihe nicht auseinanderlaufen, sondern stets in Kontakt miteinander bleiben, ist es von Vorteil, wenn der Förderer mindestens eine Bremseinrichtung umfaßt, mittels derer jeweils mindestens eine sich längs der Förderrichtung bewegende Halterung abbremsbar ist.

Auch diese Bremseinrichtung kann beispielsweise eine Reibradbremse umfassen.

Um einen kontinuierlichen Betrieb des Förderers zu ermöglichen, werden die Halterungen vorzugsweise in dem Förderer im Kreislauf gefördert.

Um den Platzbedarf des Förderers zu vermindern, kann vorgesehen sein, daß der Förderer einen Vorlaufbereich und einen über oder unter dem Vorlaufbereich angeordneten Rücklaufbereich für die Halterungen umfaßt. In diesem Falle umfaßt der Förderer eine Anhebestation zum Anheben und/oder eine Absenkstation zum Absenken der Halterungen, um die Halterungen zwischen dem Niveau des Vorlaufbereichs und dem Niveau des Rücklaufbereichs transportieren zu können.

Alternativ hierzu kann auch vorgesehen sein, daß der Förderer einen in derselben Ebene neben dem Vorlaufbereich angeordneten Rücklaufbereich für die Halterungen umfaßt. In diesem Falle umfaßt der Förderer mindestens eine Quertransporteinrichtung, um die Halterungen von dem Vorlaufbereich in den Rücklaufbereich und wieder zurück in den Vorlaufbereich fördern zu können.

Bei einer bevorzugten Ausgestaltung der Erfindung ist vorgesehen, daß an dem Basisteil einer Halterung mindestens eine Laufrolle angeordnet ist, welche bei der Bewegung der Halterung längs der Förderrichtung auf einer Laufschiene abrollt.

Um das an jeweils einer Halterung gehaltene Werkstück in definierter Weise in den Handlungsbereich hineindrehen und aus dem Behandlungsbereich wieder herausdrehen zu können, umfaßt der Drehteil einer Halterung vorteilhafterweise mindestens ein Führungselement und umfaßt der Förderer mindestens eine Führungsbahn, an welcher das Führungselement so geführt wird, daß der Drehteil relativ zu dem Basisteil gedreht wird.

Um die Führungsbahn des Förderers möglichst einfach gestalten zu können, ist es von Vorteil, wenn der Drehteil mehrere Führungselemente umfaßt, die während der Drehung des Drehteils nacheinander an der Führungsbahn geführt werden.

Ferner kann vorgesehen sein, daß die Führungsbahn mehrere längs der Förderrichtung aufeinanderfolgende Führungsbahnabschnitte umfaßt, an denen während der Drehung des Drehteils jeweils eines der Führungselemente geführt wird.

Um es zu ermöglichen, daß Führungselemente des Drehteils aus der Führungsbahn austreten oder in die Führungsbahn eintreten, ist es günstig, wenn die längs der Förderrichtung aufeinanderfolgenden Führungsbahnabschnitte längs der Förderrichtung voneinander beabstandet sind.

Die Führungsbahn des Förderers kann besonders einfach gestaltet werden, wenn die Führungselemente des Drehteils so angeordnet sind, daß die Winkelabstände einander benachbarter Führungselemente bezüglich der Drehachse des Drehteils mindestens zwei verschiedene Werte aufweisen.

Insbesondere kann vorgesehen sein, daß die Winkelabstände einander benachbarter Führungselemente bezüglich der Drehachse des Drehteils abwechselnd ungefähr 60° und ungefähr 120° betragen.

Weitere Merkmale und Vorteile der Erfindung sind Gegenstand der nachfolgenden Beschreibung und zeichnerischen Darstellung eines Ausführungsbeispiels.

In den Zeichnungen zeigen:
Fig. 1a und 1b eine schematische Seitenansicht einer Fördervorrichtung zum Fördern von Fahrzeugkarosserien durch ein Behandlungsbad zur Oberflächenbehandlung der Fahrzeugkarosserien;
Fig. 2a und 2b eine schematische Draufsicht auf die Fördervorrichtung aus den Fig. 1a und 1b;
Fig.3 eine vergrößerte schematische Seitenansicht des zentralen Vorlaufbereichs der Fördervorrichtung mit dem Behandlungsbad, in der ein Drehkreuz einer Fahrzeugkarosserie-Halterung in mehreren aufeinanderfolgenden Bewegungsphasen dargestellt ist;
Fig. 4 eine schematische Draufsicht auf den zentralen Vorlaufbereich der Fördervorrichtung mit dem Behandlungsbad;
Fig. 5 einen schematischen Schnitt durch eine auf einer Fahrzeugkarosserie-Halterung angeordnete Fahrzeugkarosserie und das Behandlungsbad;
Fig. 6 eine schematische Draufsicht auf eine Fahrzeugkarosserie-Halterung;
Fig. 7 bis 15 schematische Seitenansichten des zentralen Vorlaufbereichs der Fördervorrichtung, in denen mehrere aufeinanderfolgende Bewegungsphasen der Fahrzeugkarosserie-Halterungen und der daran angeordneten Fahrzeugkarosserien dargestellt sind.

Gleiche oder funktional äquivalente Elemente sind in allen Figuren mit denselben Bezugszeichen bezeichnet.

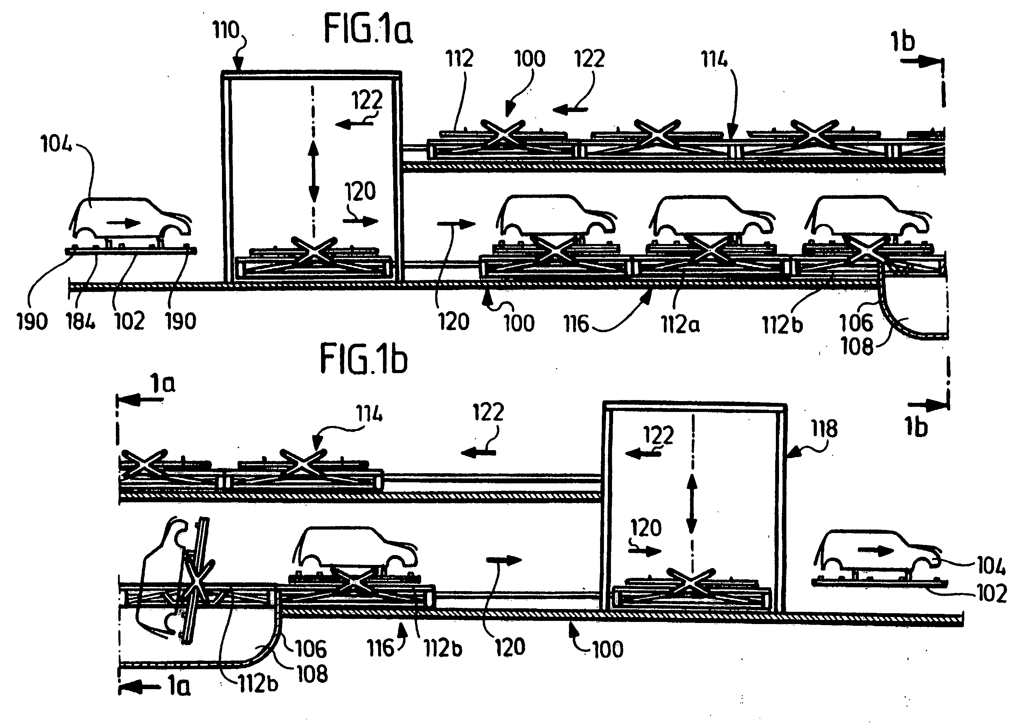

Eine in den Fig. 1a, 1b bis 15 dargestellte, als Ganzes mit 100 bezeichnete Fördervorrichtung zum Fördern von auf Skidrahmen 102 angeordneten Fahrzeugkarosserien 104 durch ein in einem Tauchbecken 106 angeordnetes Behandlungsbad 108 (beispielsweise ein Tauchlackierbad) zur Oberflächenbehandlung der Fahrzeugkarosserien 104 umfaßt eine eingangsseitige Absenkstation 110 zum Absenken von als Schubplattformen 112 ausgebildeten Fahrzeugkarosserie-Halterungen von einem auf einem oberen Niveau angeordneten Rücklaufbereich 114 zu einem auf einem unteren Niveau angeordneten Vorlaufbereich 116 der Fördervorrichtung 100.

Ferner umfaßt die Fördervorrichtung 100 eine ausgangsseitige Anhebestation 118, in welcher die Schubplattformen 112 von dem Niveau des Vorlaufbereichs 116 auf das Niveau des Rücklaufbereichs 114 angehoben werden.

Zum Absenken bzw. Anheben der Schubplattformen 112 können die Absenkstation 110 bzw. die Anhebestation 118 beispielsweise mit jeweils einem Scherenhubtisch versehen sein.

Die auf den Skidrahmen 102 angeordneten Fahrzeugkarosserien 104 werden in der Absenkstation 110 auf eine leere Schubplattform 112 aufgesetzt, an derselben arretiert und dann längs einer Förderrichtung 120 durch den Vorlaufbereich 116 gefördert, wobei die Fahrzeugkarosserien 104 auf im folgenden noch näher zu beschreibende Weise in das Behandlungsbad 108 eingebracht und aus demselben wieder ausgebracht werden.

In der Anhebestation 118 wird die auf dem Skidrahmen 102 angeordnete Fahrzeugkarosserie 104 von der Schubplattform 112 gelöst und mittels einer (nicht dargestellten) weiteren Fördervorrichtung aus der Anhebestation 118 heraus in einen nachfolgenden Behandlungsabschnitt, beispielsweise in einen Trockner, gefördert.

Die leere Schubplattform 112 wird in der Anhebestation 118 auf das Niveau des Rücklaufbereichs 114 angehoben und durch den Rücklaufbereich 114 längs einer Rücklaufrichtung 122 in die Absenkstation 110 zurückgefördert, in welcher die leere Schubplattform 112 wieder auf das Niveau des Vorlaufbereichs 116 abgesenkt wird, um erneut eine auf einem Skidrahmen 102 angeordnete Fahrzeugkarosserie 104 aufzunehmen.

Die Schubplattformen 112 werden demnach im Kreislauf durch die Absenkstation 110, den Vorlaufbereich 116, die Anhebestation 118 und den Rücklaufbereich 114 gefördert.

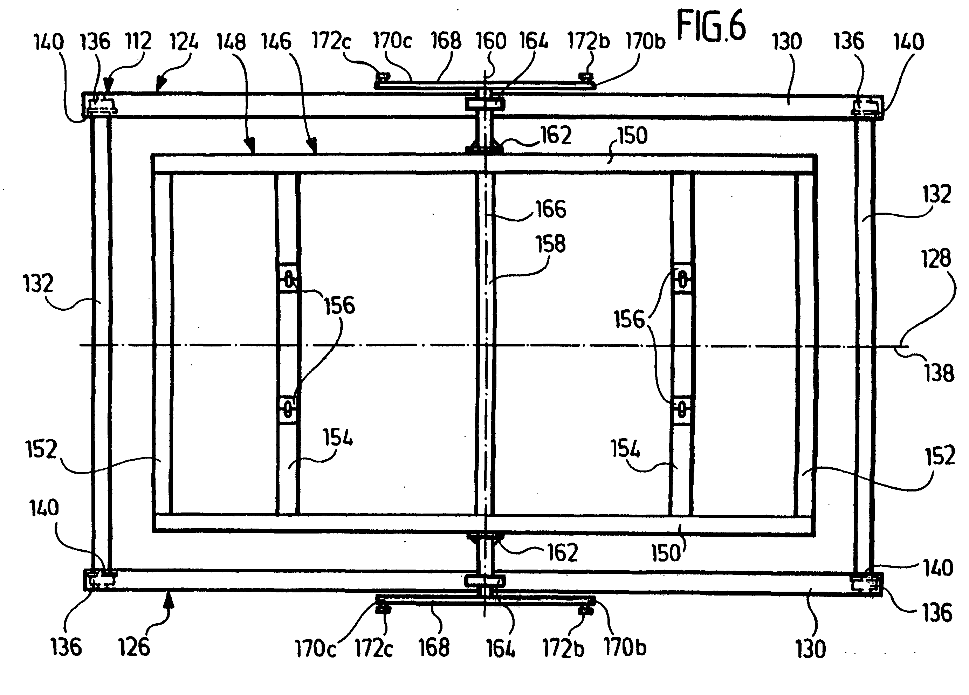

Der Aufbau einer Schubplattform 112 wird im folgenden unter Bezugnahme auf die Fig. 6 näher beschrieben.

Jede Schubplattform 112 umfaßt einen Basisteil 124 mit einem im wesentlichen rechteckigen Grundrahmen 126, der aus parallel zu einer Längsrichtung 128 der Schubplattform 112 ausgerichteten Längsträgern 130 und aus die Längsträger an deren Enden miteinander verbindenden Querträgern 132 zusammengesetzt ist.

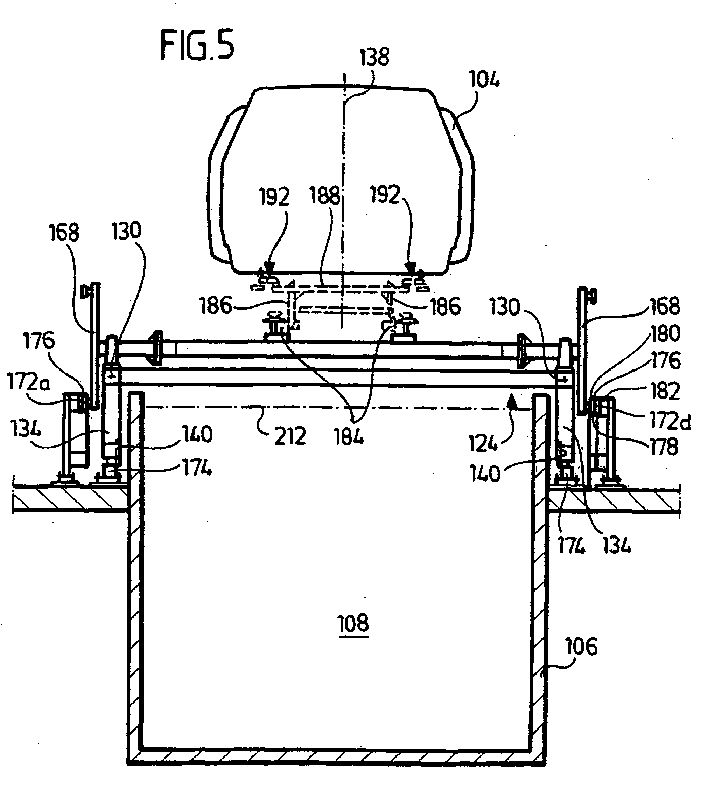

Von jedem Ende jedes der Längsträger 130 erstreckt sich jeweils ein Rollenträger 134 senkrecht nach unten (siehe Fig. 5). Am unteren Ende jedes Rollenträgers 134 ist jeweils eine Laufrolle 136 mit einem der Längsmittelebene 138 der Schubplattform 112 zugewandten Spurkranz 140 drehbar gelagert.

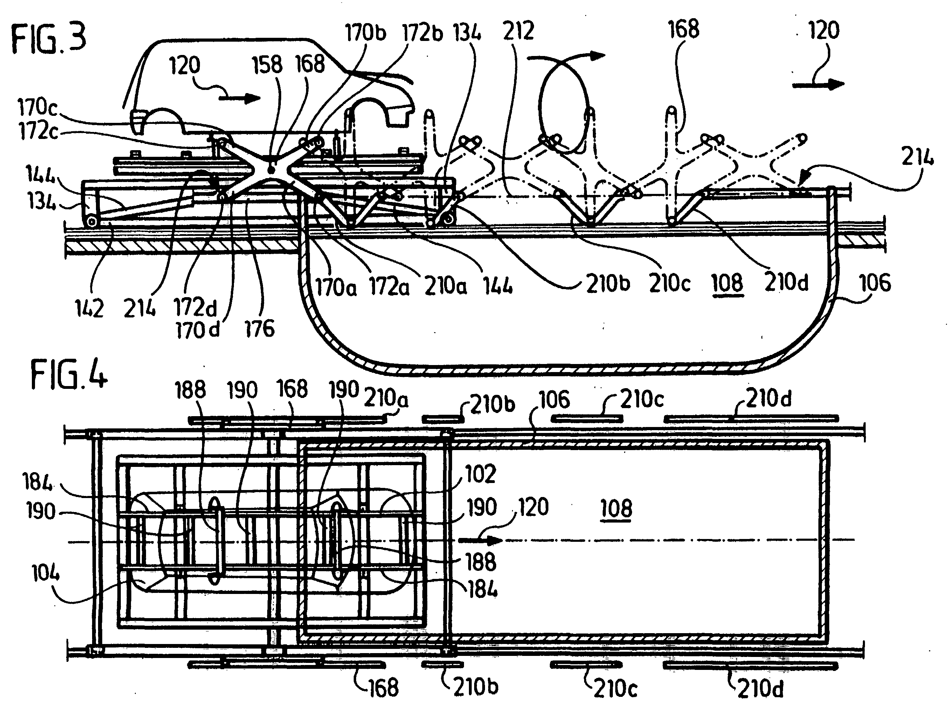

Wie aus Fig. 3 zu ersehen ist, sind jeweils ein in der Förderrichtung 120 vorne liegender Rollenträger 134 und ein in der Förderrichtung 120 hinten liegender Rollenträger an ihren unteren Enden mittels eines unteren Längsträgers 142 miteinander verbunden.

Zusätzliche Verstrebungen 144, welche jeweils einen Rollenträger 134 mit einem zentralen Bereich eines Längsträgers 130 verbinden, dienen der Erhöhung der Stabilität des Basisteils 124.

Ferner umfaßt die Schubplattform 112 einen Drehteil 146 (Fig. 6) mit einem im wesentlichen rechteckigen Drehrahmen 148, der (in einer Ruhestellung des Drehteils 146) parallel zu der Längsrichtung 128 ausgerichtete Längsträger 150 und diese Längsträger an ihren Enden miteinander verbindende äußere Querträger 152 umfaßt.

Zwischen den äußeren Querträgern 152 sind, beispielsweise zwei, weitere innere Querträger 154 vorgesehen, die ebenfalls die Längsträger 150 des Drehrahmens 148 miteinander verbinden und Skid-Spannvorrichtungen 156 zur Aufnahme und Arretierung eines Skidrahmens 102 tragen.

Ferner ist eine Drehwelle 158 vorgesehen, welche sich längs der Quermittelebene 160 der Schubplattform durch die Längsträger 150 des Drehrahmens 148 hindurcherstreckt, mit den Längsträgern 150 mittels Anschraubflanschen 162 drehfest verbunden und in an der Oberseite der Längsträger 130 des Basisteils 124 festgelegten Lagerböcken 164 frei drehbar gelagert ist.

Somit ist der Drehteil 146 relativ zu dem Basisteil 124 um die Drehachse 166 der Drehwelle 158 um beliebige Winkel drehbar.

Wie ferner aus den Fig. 3 bis 6 zu ersehen ist, sind die beiden über die Lagerböcke 164 überstehenden Enden der Drehwelle 158 mit jeweils einem als Führungselement dienenden Drehkreuz 168 versehen, von denen jedes einen unteren vorderen Schenkel 170a, einen oberen vorderen Schenkel 170b, einen oberen hinteren Schenkel 170c und einen unteren hinteren Schenkel 170d umfaßt, wobei der untere vordere Schenkel 170a mit dem oberen vorderen Schenkel 170b einen Winkel von ungefähr 60°, mit dem oberen hinteren Schenkel 170c einen Winkel 180° und mit dem unteren hinteren Schenkel 170d einen Winkel von ungefähr 240° (oder 120°) einschließt.

In der Ruhestellung des Drehteils 146 schließt der untere vordere Schenkel 107a mit der Horizontalen einen Winkel von ungefähr 30° ein.

An dem freien Ende jedes der Schenkel 170a, 170b, 170c und 170d ist jeweils eine Nockenrolle 172a, 172b, 172c bzw. 172d drehbar gelagert.

Die Drehkreuze 168 mit den Nockenrollen 172a bis 172d dienen dazu, eine Drehbewegung des Drehteils 146 zu steuern, wie im folgenden noch ausführlich erläutert werden wird.

Die vorstehend beschriebene Schubplattform 112 wird in der Absenkstation 110 mit den Laufrollen 136 auf zwei sich parallel zur Förderrichtung 120 erstreckende, quer zur Förderrichtung 120 voneinander beabstandete Laufschienen 174 (siehe Fig. 5) aufgesetzt, derart, daß die Laufrollen 136 auf der Oberseite der Laufschienen 174 abrollen können und die Spurkränze 140 der Laufrollen 136 eine Bewegung der Schubplattform 112 senkrecht zur Förderrichtung 120 verhindern.

Statt der Spurkränze 140 an den Laufrollen 136 können auch separate Seitenführungsrollen an der Schubplattform 112 vorgesehen sein, um eine Bewegung derselben senkrecht zur Förderrichtung 120 zu verhindern.

Wie am besten aus Fig. 5 zu ersehen ist, greifen die Nockenrollen 172a und 172d an den unteren Schenkeln der Drehkreuze 168 in zwei Führungsbahnen 176 ein, die sich parallel zur Förderrichtung 120 erstrecken und quer zur Förderrichtung 120 voneinander beabstandet sind.

Im vorliegenden Fall ist jede Führungsbahn 176 als U-Profilelement mit einem unteren horizontalen Schenkel 178, einem oberen horizontalen Schenkel 180 und einem die beiden horizontalen Schenkel 178 und 180 miteinander verbindenden vertikalen Steg 182 ausgebildet.

Die unteren Nockenrollen 172a und 172d rollen auf der Oberseite des unteren horizontalen Schenkels 178 ab und verhindern so, bei horizontal verlaufender Führungsbahn 176, eine Drehung des Drehteils 146 relativ zu dem Basisteil 124 der Schubplattform 112.

Wie bereits erwähnt, wird in der Absenkstation 110 jeweils eine auf einem Skidrahmen 102 angeordnete Fahrzeugkarosserie mittels einer (nicht dargestellten) Fördervorrichtung in die Absenkstation 110 gefördert, auf eine leere Schubplattform 112 abgesetzt und mittels der Skid-Spannvorrichtung 156 lösbar an dem Drehteil 146 festgelegt.

Jeder der Skidrahmen 102 ist in der an sich bekannten Weise aufgebaut und umfaßt insbesondere jeweils zwei Skidkufen 184 (Fig. 5), welche parallel zur Fahrzeugkarosserie-Längsrichtung ausgerichtet und quer zu dieser Richtung voneinander beabstandet sind, vertikale Stützen 186, welche Quertraversen 188 tragen, sowie die beiden Skidkufen 184 miteinander verbindende Querstreben 190 (Fig. 4).

Die Fahrzeugkarosserie 104 ist mittels an sich bekannter und darum hier nicht im einzelnen beschriebener Fahrzeugkarosserie-Spannvorrichtungen 192 lösbar an den Quertraversen 188 des Skidrahmens 102 festgelegt (Fig. 5).

Wie aus Fig. 5 zu ersehen ist, greifen die Skid-Spannvorrichtungen 156 des Drehteils 146 der Schubplattform 112 an den Skidkufen 184 des Skidrahmens 102 an.

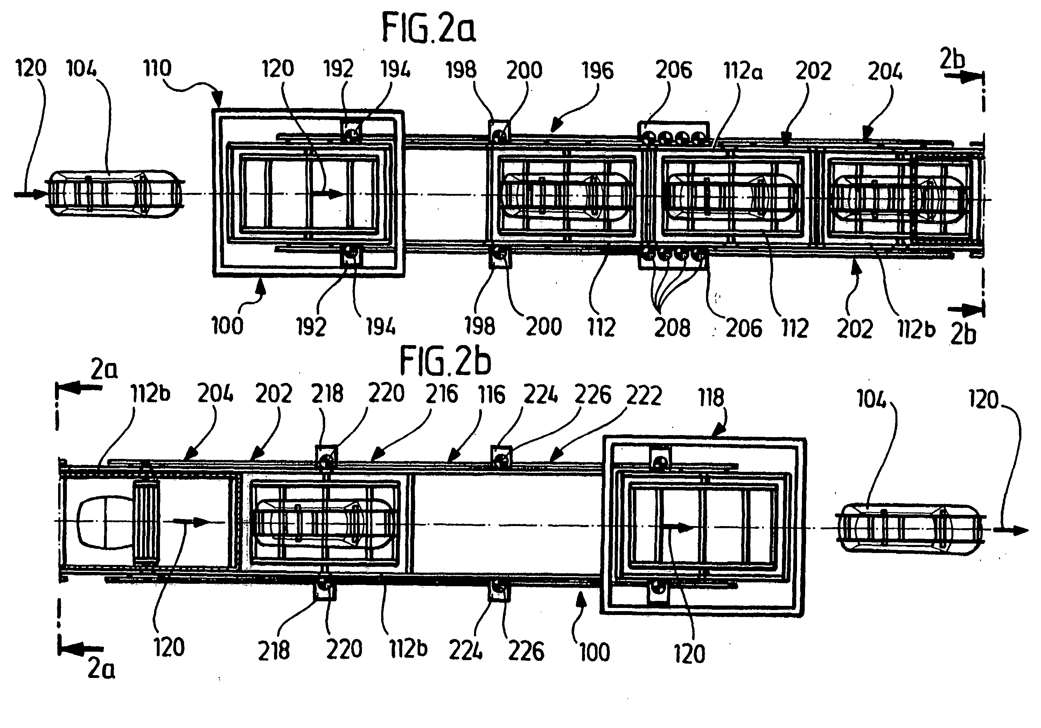

Wie aus der Fig. 2a zu ersehen ist, ist in der Absenkstation 110 zu beiden Seiten der Schubplattform 112 jeweils ein Reibradantrieb 192 mit jeweils einem Reibantriebsrad 194 angeordnet, wobei jedes Reibantriebsrad 194 motorisch zu einer Drehbewegung um eine vertikale Achse antreibbar ist und an seinem Umfang mit jeweils einem der unteren Längsträger 142 des Basisteils 124 der Schubplattform 112 in Kontakt steht, so daß die Schubplattform 112 längs der Förderrichtung 120 in Bewegung gesetzt wird, wenn die Reibantriebsräder 194 in Drehbewegung (von oben gesehen im Uhrzeigersinn) versetzt werden.

Nachdem eine Fahrzeugkarosserie 104 mit ihrem Skidrahmen 102 an der in der Absenkstation 110 befindlichen Schubplattform 112 festgelegt worden ist, werden die Reibradantriebe 192 der Absenkstation 110 in Betrieb genommen, um die Schubplattform 112 in einen sich an dieselbe anschließenden Einlaufabschnitt 196 des Vorlaufbereichs 116 der Fördervorrichtung 100 zu fördern.

Auch der Einlaufabschnitt 196 ist beiderseits der zur fördernden Schubplattformen 112 mit jeweils einem Reibradantrieb 198, der jeweils ein Reibantriebsrad 200 umfaßt, versehen.

Während die Reibradantriebe 192 in der Absenkstation 110 taktweise arbeiten, arbeiten die Reibradantriebe 198 des Einlaufabschnittes 196 kontinuierlich, um eine in den Einlaufabschnitt 196 eingelaufene Schubplattform 112 mit einer Einlaufgeschwindigkeit weiterzufördem, bis sie gegen die hinterste Schubplattform einer mit einer Prozeßvorschubgeschwindigkeit geförderten Schubplattformenreihe 202 anstößt, deren Schubplattformen sich gemeinsam durch einen an den Einlaufabschnitt 196 anschließenden Hauptabschnitt 204 des Vorlaufbereichs 116 bewegen, und darauf von Hauptreibradantrieben angetrieben wird.

Wie aus den Fig. 1a, 1b, 2a, 2b und 7 bis 15 zu ersehen ist, stehen die Schubplattformen 112 der Schubplattformenreihe 202 in der Weise miteinander in Kontakt, daß die vorderen Enden der Längsträger 130 und die vorderen Rollenträger 134 einer in der Förderrichtung 120 weiter hinter liegenden Schubplattform 112 mit den hinteren Enden der Längsträger 130 und den hinteren Rollenträgern 134 der in der Förderrichtung 120 unmittelbar vor der ersteren Schubplattform 112 liegenden Schubplattform 112 in Kontakt stehen. Durch diesen unmittelbaren Kontakt zwischen längs der Förderrichtung 120 aufeinanderfolgenden Schubplattformen 112 ist es möglich, eine Vorwärtsbewegung bzw. eine vorwärtsgerichtete Antriebskraft von einer in der Förderrichtung 120 weiter hinten liegenden Schubplattform 112 auf die in der Förderrichtung 120 weiter vorne liegende Schubplattform 112 zu übertragen.

Von den zu der Schubplattformenreihe 202, die sich durch den Hauptabschnitt 204 des Vorlaufbereichs 116 der Fördervorrichtung 100 bewegt, gehörenden Schubplattformen 112 wird daher nur die jeweils hinterste Schubplattform 112a mittels am Anfang des Hauptabschnittes 204 angeordneter Hauptreibradantriebe 206 direkt angetrieben, während die weiter vorne liegenden Schubplattformen 112b der Schubplattformenreihe 202 lediglich indirekt, über den Kontakt zu der jeweils weiter hinten liegenden Schubplattform 112, angetrieben werden.

Da die Hauptreibradantriebe 206 direkt oder indirekt die gesamte Schubplattformenreihe 202 antreiben müssen, sind diese jeweils mit einer Mehrzahl von Reibantriebsrädern 208, beispielsweise mit jeweils vier Reibantriebrädern 208, versehen.

Auf diese Weise wird jede der Schubplattformen 112 als Bestandteil der Schubplattformenreihe 202 durch den Hauptabschnitt 204 und insbesondere über das zwischen den Laufschienen 174 angeordnete und das Behandlungsbad 108 enthaltende Tauchbecken 106 hinweg gefördert.

Um die Fahrzeugkarosserien 104 im Anfangsbereich des Behandlungsbads 108 in das Behandlungsbad 108 einzubringen und die Fahrzeugkarosserien 104 im Endbereich des Behandlungsbads 108 wieder aus dem Behandlungsbad 108 auszubringen, wird der Drehteil 146 jeder Schubplattform 112 relativ zu dem Basisteil 124 der Schubplattform 112 gedreht, wobei der Ablauf der Drehbewegung mittels der Drehkreuze 168 gesteuert wird.

Zu diesem Zweck weist jede der Führungsbahnen 176 im Bereich des Behandlungsbads 108 vier aufeinanderfolgende Führungsbahnabschnitte 210a, 210b, 210c und 210d auf.

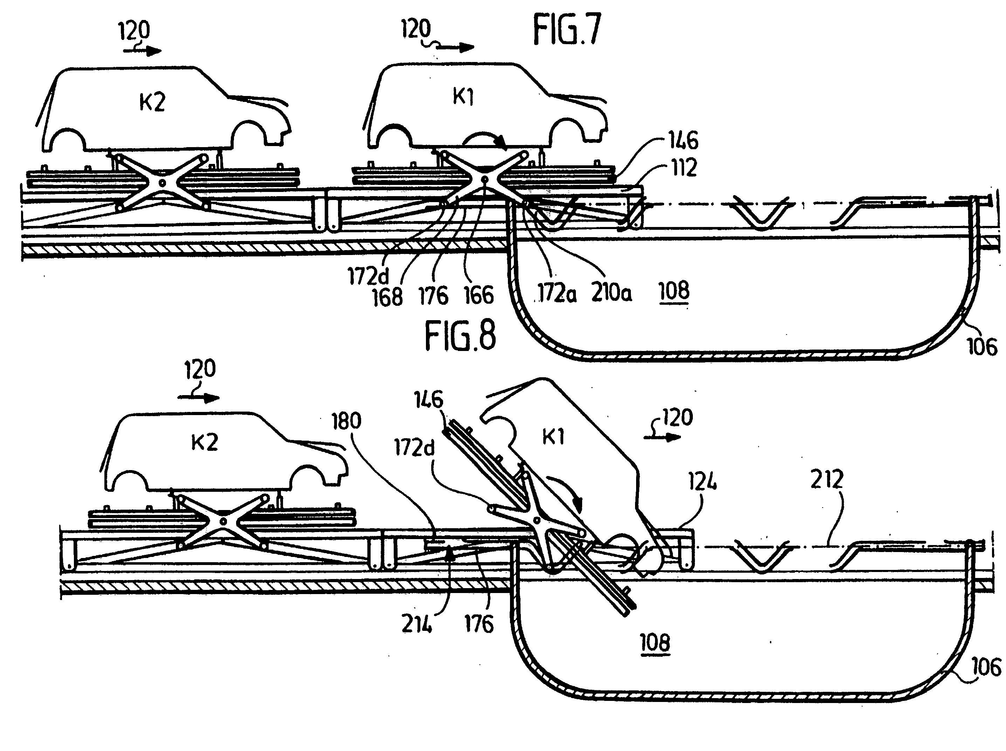

Wie aus Fig. 3 und aus den Fig. 7 bis 15 zu ersehen ist, weist der erste Führungsbahnabschnitt 210a im wesentlichen die Form eines V auf, mit einem ersten Teilabschnitt, welcher unter einem Winkel von ungefähr 45° nach unten gerichtet ist, und einem zweiten Teilabschnitt, welcher unter einem Winkel von ungefähr 45° nach oben gerichtet ist.

Am Ende des zweiten Teilabschnitts des ersten Führungsbahnabschnitts 210a ist die Führungsbahn 176 unterbrochen. Der längs der Förderrichtung 120 im Abstand von dem ersten Führungsbahnabschnitt 210a angeordnete zweite Führungsbahnabschnitt 210b führt von dem unteren Führungsbahnniveau unter einem Winkel von ungefähr 45° auf das obere Führungsbahnniveau, wo die Führungsbahn 176 wiederum unterbrochen wird.

Der längs der Förderrichtung 120 im Abstand von dem zweiten Führungsbahnabschnitt 210b angeordnete dritte Führungsbahnabschnitt 210c weist wie der erste Führungsbahnabschnitt 210a im wesentlichen die Form eines V auf, wobei ein erster Teilabschnitt des dritten Führungsbahnabschnitts 210c von dem oberen Führungsbahnniveau unter einem Winkel von ungefähr 45° zu dem unteren Führungsbahnniveau führt und ein zweiter Teilabschnitt des dritten Führungsbahnabschnitts 210c unter einem Winkel von ungefähr 45° von dem unteren Führungsbahnniveau zurück auf das obere Führungsbahnniveau führt, wo die Führungsbahn 176 wiederum unterbrochen ist.

Der längs der Förderrichtung 120 im Abstand von dem dritten Führungsbahnabschnitt 210c angeordnete vierte Führungsbahnabschnitt 210d führt von dem unteren Führungsbahnniveau unter einem Winkel von ungefähr 45° zu dem oberen Führungsbahnniveau, von wo aus die Führungsbahn 176 wieder horizontal verläuft.

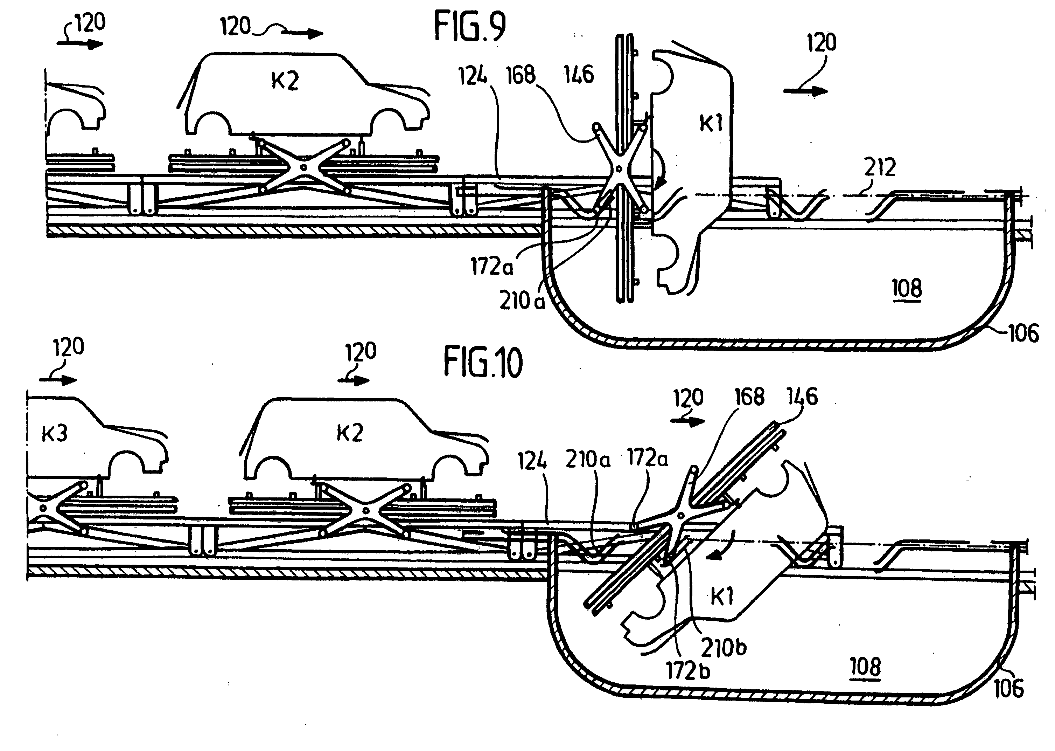

Gelangt eine Fahrzeugkarosserie K1 in den Anfangsbereich des Behandlungsbads 108 (siehe Fig. 7), so läuft die untere vordere Nockenrolle 172a des Drehkreuzes 168 der zugehörigen Schubplattform 112 in dem ersten Führungsbahnabschnitt 210a von dem oberen Führungsbahnniveau auf das untere Führungsbahnniveau, wodurch das Drehkreuz 168, der Drehteil 146 und die drehfest damit verbundene Fahrzeugkarosserie K1 um einen Winkel von ungefähr 60° (in der Blickrichtung der Fig. 7 gesehen im Uhrzeigersinn) um die Drehachse 166 gedreht werden. Dabei taucht der vordere Bereich der Fahrzeugkarosserie K1 in das Behandlungsbad 108 mit dem Badspiegel 212 ein (siehe Fig. 8).

Um diese Drehbewegung zu ermöglichen, ist der obere Schenkel 180 der Führungsbahn 176 an einer vor dem ersten Führungsbahnabschnitt 210a liegenden Stelle mit einer Unterbrechung 214 versehen, durch welche die untere hintere Nockenrolle 172d aus der Führungsbahn 176 austreten kann.

Während der Basisteil 124 der Schubplattform 112 kontinuierlich längs der Förderrichtung 120 weiterbewegt wird, läuft die untere vordere Nockenrolle 172a in dem zweiten Teilabschnitt des ersten Führungsbahnabschnitts 210a wieder zurück auf das obere Führungsbahnniveau (siehe Fig. 9), wodurch der Drehteil 146 und die Fahrzeugkarosserie K1 im Uhrzeigersinn um einen Winkel von ungefähr 60° weitergedreht werden, bis die untere vordere Nockenrolle 172a aus dem ersten Führungsbahnabschnitt 210a heraustritt und die obere vordere Nockenrolle 172b in den zweiten Führungsbahnabschnitt 210b eintritt (siehe Fig. 10). Zu diesem Zeitpunkt sind bereits der gesamte vordere Teil der Fahrzeugkarosserie K1 und nahezu das gesamte Dach der Fahrzeugkarosserie K1 in das Behandlungsbad 108 eingetaucht.

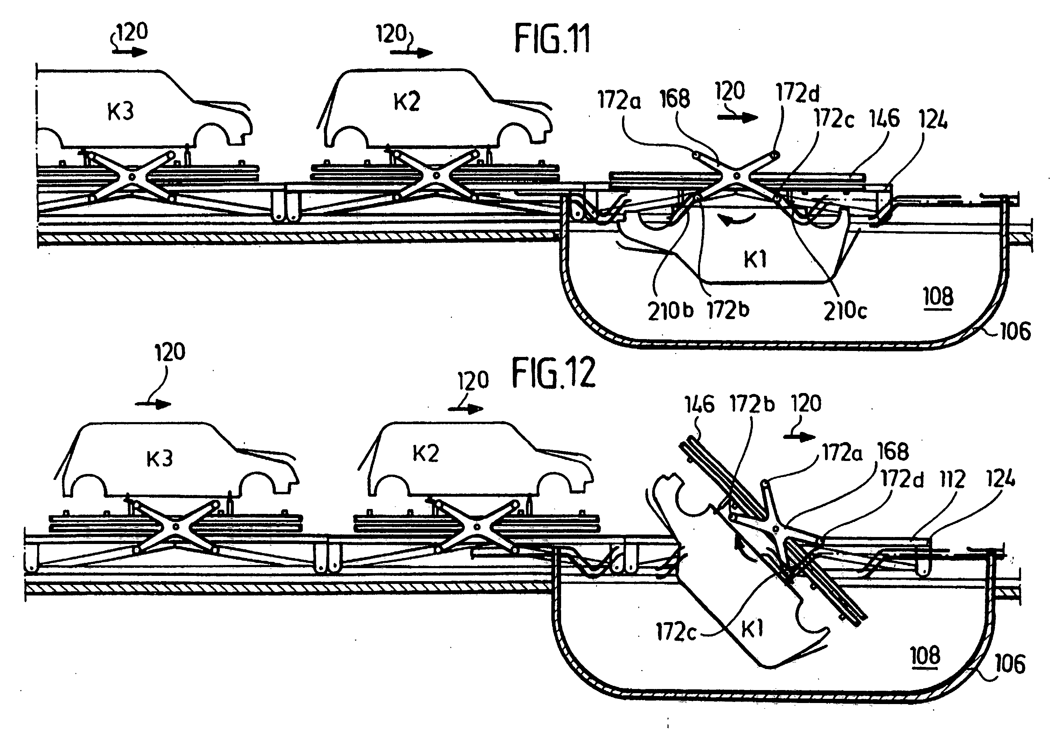

Bei kontinuierlicher Weiterbewegung des Basisteils 124 der Schubplattform 112 längs der Förderrichtung 120 läuft die obere vordere Nockenrolle 172b in dem zweiten Führungsbahnabschnitt 210b nach oben auf das obere Führungsbahnniveau, wodurch sich das Drehkreuz 168 mit dem Drehteil 146 und der Fahrzeugkarosserie K1 um ungefähr weitere 60° in derselben Drehrichtung weiter dreht, bis die obere vordere Nockenrolle 172b aus dem zweiten Führungsbahnabschnitt 210b austritt und zugleich die obere hintere Nockenrolle 172c in den dritten Führungsbahnabschnitt 210c eintritt (siehe Fig. 11).

In diesem Zustand ist der Drehteil 146 mit der Karosserie K1 um 180° aus der Ruhelage gedreht worden, so daß sich die Fahrzeugkarosserie K1 nunmehr vollständig in dem Behandlungsbad 108 befindet. Die Fahrzeugkarosserie K1 könnte nun in dieser Kopfüberstellung, in welcher sich das Dach der Fahrzeugkarosserie unterhalb der Bodengruppe der Fahrzeugkarosserie befindet, längs der Förderrichtung 120 durch das Behandlungsbad 108 gefördert werden, wenn zwischen dem zweiten Führungsbahnabschnitt 210b und dem dritten Führungsbahnabschnitt 210c ein horizontaler Führungsbahnabschnitt auf dem oberen Führungsbahnniveau vorgesehen wäre.

Bei dem dargestellten Ausführungsbeispiel ist jedoch vorgesehen, daß die Fahrzeugkarosserie K1, während sie weiter durch das Behandlungsbad 108 gefördert wird, sogleich wieder aus der Kopfüberstellung heraus gedreht wird.

Die obere hintere Nockenrolle 172c läuft nämlich in dem ersten Teilabschnitt des dritten Führungsbahnabschnitts 210c nach unten bis auf das untere Führungsbahnniveau (siehe Fig. 12), wodurch das Drehkreuz 168 mit dem Drehteil 146 und der Fahrzeugkarosserie K1 um einen Winkel von ungefähr 60° (in der Blickrichtung der Fig. 12 gesehen) im Uhrzeigersinn, also unter Beibehaltung der bisherigen Drehrichtung, weiter gedreht wird, wodurch das Vorderteil der Fahrzeugkarosserie K1 wieder aus dem Behandlungsbad 108 auftaucht.

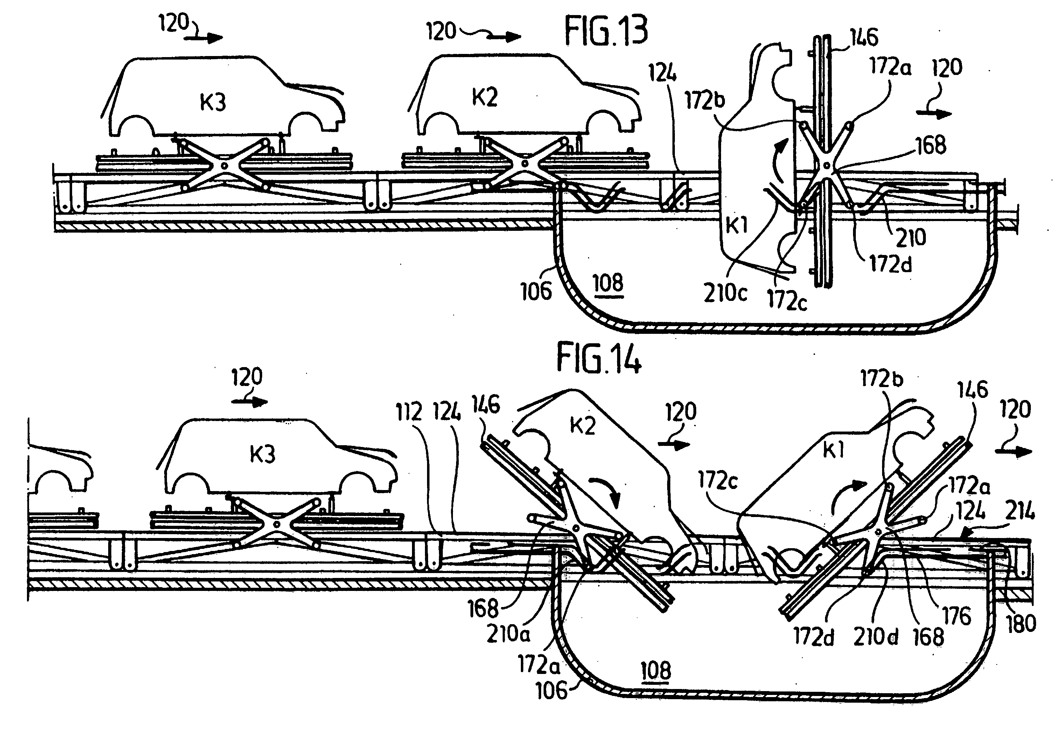

Während sich der Basisteil 124 der Schubplattform 112 längs der Förderrichtung 120 kontinuierlich weiterbewegt, läuft die obere hintere Nockenrolle 172c in dem zweiten Teilabschnitt des dritten Führungsbahnabschnitts 210c wieder nach oben (siehe Fig. 13), bis die obere hintere Nockenrolle 172c aus dem dritten Führungsbahnabschnitt 210c austritt und zugleich die untere hintere Nockenrolle 172d in den vierten Führungsbahnabschnitt 210d eintritt (Fig. 14). Hierdurch wird die Fahrzeugkarosserie K1 so weiter gedreht, daß sich nur noch der Unterteil des hinteren Bereichs der Fahrzeugkarosserie K1 im Behandlungsbad 108 befindet.

Gleichzeitig läuft die untere vordere Nockenrolle 172a des Drehkreuzes 168 der nachfolgenden Schubplattform 112, auf welcher die Fahrzeugkarosserie K2 angeordnet ist, in dem ersten Führungsbahnabschnitt 210a von dem oberen Führungsbahnniveau aus nach unten, wodurch die Fahrzeugkarosserie K2 in das Behandlungsbad 108 hineingedreht wird.

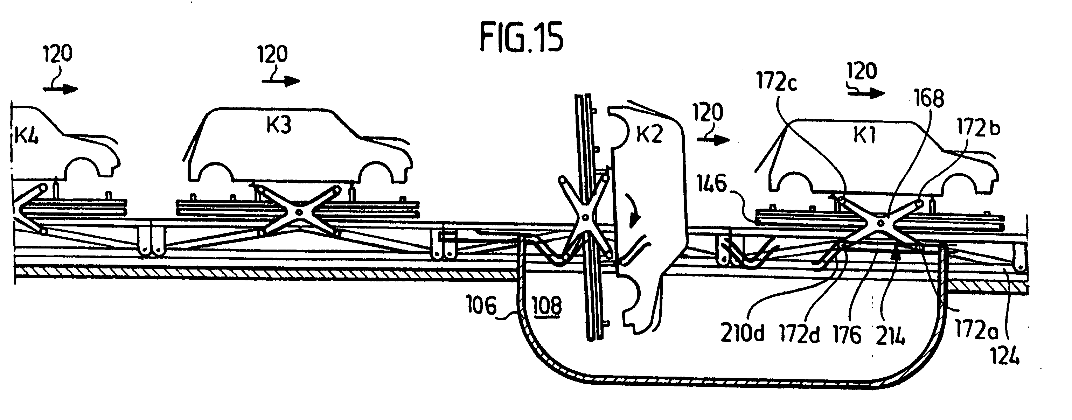

Unter fortwährender kontinuierlicher Vorwärtsbewegung des Basisteils 124 längs der Förderrichtung 120 läuft die der Fahrzeugkarosserie K1 zugeordnete untere hintere Nockenrolle 172d in dem vierten Führungsbahnabschnitt 210d nach oben auf das obere Führungsbahnniveau, wodurch sich das Drehkreuz 168 mit dem Drehteil 146 und der Fahrzeugkarosserie K1 wieder in die Ausgangsstellung, in welcher das Dach der Fahrzeugkarosserie K1 über der Bodengruppe der Fahrzeugkarosserie angeordnet ist, zurückdreht (siehe Fig. 15).

Hierbei tritt die untere vordere Nockenrolle 172a durch eine in der Förderrichtung 120 hinter dem vierten Führungsbahnabschnitt 210d liegende Unterbrechung 214 (siehe Fig. 14) in dem oberen Schenkel 180 der Führungsbahn 176 wieder in die Führungsbahn 176 ein.

Bei weiterer Vorwärtsbewegung des Basisteils 124 längs der Förderrichtung 120 laufen nunmehr sowohl die untere vordere Nockenrolle 172a als auch die untere hintere Nockenrolle 172d innerhalb der horizontalen Führungsbahn 176, so daß im Verlauf der weiteren Translationsbewegung der Schubplattform 112 der Drehteil 146 sich nicht mehr relativ zu dem Basisteil 124 dreht.

Die Schubplattform 112 mit der darauf angeordneten Karosserie K1 gelangt so in der Ruhestellung in einen auf den Hauptabschnitt 204 folgenden Bremsabschnitt 216 des Vorlaufbereichs 116 (siehe Fig. 2b), in dem beiderseits der Skidplattformen 112 jeweils eine Reibradbremse 218 mit jeweils einem Reibbremsrad 220 angeordnet ist.

Auch die Reibbremsräder 220 stehen in Kontakt mit den Längsträgern 130 der Schubplattformen 112, drehen sich aber in zu der Drehrichtung der Reibantriebsräder 194, 200 und 208 entgegengesetzter Richtung (von oben gesehen im Gegenuhrzeigersinn) und somit der Bewegungsrichtung der Schubplattformen 112 entgegen, so daß die jeweils im Bremsabschnitt 216 befindliche Schubplattform 112 der Schubplattformenreihe 202 durch die Reibradbremse 218 abgebremst wird.

Hierdurch ist gewährleistet, daß die Schubplattform 112 der Schubplattformenreihe 202 nicht auseinanderlaufen, sondern stets in Kontakt miteinander bleiben.

Wie aus der Fig. 2b zu ersehen ist, schließt sich an den Bremsabschnitt 216 ein Auslaufabschnitt 222 des Vorlaufbereichs 116 der Fördervorrichtung 100 an, in dem beiderseits des Wegs der Schubplattformen 112 jeweils ein Reibradantrieb 224 mit jeweils einem Reibantriebsrad 226 angeordnet ist.

Die Reibradantriebe 224 des Auslaufabschnitts 222 fördern taktweise jeweils eine Schubplattform 112 mit einer Ausfaufgeschwindigkeit in die Anhebestation 118, in welcher die darauf angeordnete Fahrzeugkarosserie 104 mit Skidrahmen 102 durch Öffnen der Skid-Spannvorrichtung 156 von der Schubplattform 112 gelöst und abgehoben und auf eine weitere (nicht dargestellte) Fördervorrichtung aufgesetzt wird, welche die Fahrzeugkarosserie 104 mit dem Skidrahmen 102 aus der Anhebestation 118 herausfördert.

Die Einlauf- und die Auslaufgeschwindigkeit der Skidrahmen 112 sind höher als die Prozeßvorschubgeschwindigkeit, mit welcher die Schubplattformenreihe 202 durch den Hauptabschnitt 204 des Vorlaufbereiches 116 gefördert wird.

Anschließend wird die leere Schubplattform 112 auf das Niveau des Rücklaufbereichs 114 der Fördervorrichtung 100 angehoben und mittels (nicht dargestellter) Reibradantriebe längs der Rücklaufrichtung 122 in die Absenkstation 110 zurückgefördert, wo die leere Schubplattform 112 wieder auf das Niveau des Vortaufbereichs 116 abgesenkt wird, um erneut eine Fahrzeugkarosserie 104 mit Skidrahmen 102 aufzunehmen.

## Patentansprüche

1. Fördervorrichtung zum Fördern von Werkstücken, insbesondere von Fahrzeugkarosserien (104), durch einen Behandlungsbereich (108) zur Oberflächenbehandlung der Werkstücke,
umfassend einen Förderer, der die an jeweils einer Halterung (112) gehaltenen Werkstücke in den Behandlungsbereich (108) einbringt, durch den Behandlungsbereich (108) fördert und aus dem Behandlungsbereich (108) wieder ausbringt,
**dadurch gekennzeichnet,**
**daß** die Halterungen (112) jeweils einen sich längs einer Förderrichtung (120) translativ bewegenden Basisteil (124) und einen Drehteil (146), an welchem das Werkstück angeordnet ist und welcher drehbar an dem Basisteil (124) gehalten ist, umfassen und daß der Förderer mindestens eine Antriebseinrichtung (206) umfaßt, mittels derer jeweils mindestens eine direkt angetriebene Halterung (112a) direkt zu einer Bewegung längs der Förderrichtung (120) antreibbar ist, wobei die Bewegung der direkt angetriebenen Halterung (112a) durch Kontakt der direkt angetriebenen Halterung mit mindestens einer indirekt angetriebenen Halterung (112b) auf die indirekt angetriebene Halterung übertragen wird.

2. Fördervorrichtung nach Anspruch 1, **dadurch gekennzeichnet, daß** der Basisteil (124) der jeweils direkt angetriebenen Halterung (112a) mit dem Basisteil (124) der indirekt angetriebenen Halterung (112b) in Kontakt steht.

3. Fördervorrichtung nach einem der Ansprüche 1 oder 2, **dadurch gekennzeichnet, daß** die Bewegung der jeweils direkt angetriebenen Halterung (112a) auf mindestens zwei indirekt angetriebene Halterungen (112b) übertragen wird.

4. Fördervorrichtung nach einem der Ansprüche 1 bis 3, **dadurch gekennzeichnet, daß** die Antriebseinrichtung (206) einen Reibradantrieb umfaßt.

5. Fördervorrichtung nach einem der Ansprüche 1 bis 4, **dadurch gekennzeichnet, daß** der Förderer mindestens eine Bremseinrichtung (218) umfaßt, mittels derer jeweils mindestens eine sich längs der Förderrichtung (120) bewegende Halterung (112) abbremsbar ist.

6. Fördervorrichtung nach Anspruch 5, **dadurch gekennzeichnet, daß** die Bremseinrichtung (218) eine Reibradbremse umfaßt.

7. Fördervorrichtung nach einem der Ansprüche 1 bis 6, **dadurch gekennzeichnet, daß** die Halterungen (112) in dem Förderer im Kreislauf gefördert werden.

8. Fördervorrichtung nach einem der Ansprüche 1 bis 7, **dadurch gekennzeichnet, daß** der Förderer eine Anhebestation (118) zum Anheben und/oder eine Absenkstation (110) zum Absenken der Halterungen (112) umfaßt.

9. Fördervorrichtung nach einem der Ansprüche 1 bis 8, **dadurch gekennzeichnet, daß** an dem Basisteil (124) einer Halterung (112) mindestens eine Laufrolle (136) angeordnet ist, welche bei der Bewegung der Halterung (112) längs der Förderrichtung (120) auf einer Laufschiene (174) abrollt.

10. Fördervorrichtung nach einem der Ansprüche 1 bis 9, **dadurch gekennzeichnet, daß** der Drehteil (146) einer Halterung (112) mindestens ein Führungselement (172a, 172b, 172c, 172d) umfaßt, und daß der Förderer mindestens eine Führungsbahn (176) umfaßt, an welcher das Führungselement so geführt wird, daß der Drehteil (146) relativ zu dem Basisteil (124) gedreht wird.

11. Fördervorrichtung nach Anspruch 10, **dadurch gekennzeichnet, daß** der Drehteil (146) mehrere Führungselemente (172a, 172b, 172c, 172d) umfaßt, die während der Drehung des Drehteils (146) nacheinander an der Führungsbahn (176) geführt werden.

12. Fördervorrichtung nach Anspruch 11, **dadurch gekennzeichnet, daß** die Führungsbahn (176) mehrere längs der Förderrichtung (120) aufeinanderfolgende Führungsbahnabschnitte (210a, 210b, 210c, 210d) umfaßt, an denen während der Drehung des Drehteils (146) jeweils eines der Führungselemente (172a, 172b, 172c, 172d) geführt wird.

13. Fördervorrichtung nach Anspruch 12, **dadurch gekennzeichnet, daß** die längs der Förderrichtung (120) aufeinanderfolgenden Führungsbahnabschnitte (210a, 210b, 210c, 210d) längs der Förderrichtung (120) voneinander beabstandet sind.

14. Fördervorrichtung nach einem der Ansprüche 11 bis 13, **dadurch gekennzeichnet, daß** die Führungselemente (172a, 172b, 172c, 172d) so angeordnet sind, daß die Winkelabstände einander benachbarter Führungselemente bezüglich der Drehachse (166) des Drehteils (146) mindestens zwei verschiedene Werte aufweisen.

## Claims

1. A conveyor device for advancing work-pieces, in particular vehicle bodies (104), through a processing zone (108) for the surface treatment of the work-pieces,
comprising a conveyor which moves the work-pieces mounted on a respective mounting means (112) into the processing zone (108), advances them through the processing zone (108) and then removes them from the processing zone (108),
**characterized in**
**that** the mounting means (112) each comprise a respective base part (124) which is moved in translatory manner in the direction of conveyance (120) and a rotary part (146) upon which the work-piece is arranged and which is mounted in rotatable manner on the base part (124), and in that the conveyor comprises at least one drive device (206) by means of which at least one respective directly driven mounting means (112a) is adapted to be driven directly for movement in the direction of conveyance (120), whereby, by virtue of contact between the directly driven mounting means and at least one indirectly driven mounting means (112b), the movement of the directly driven mounting means (112a) is transmitted to the indirectly driven mounting means.

2. A conveyor device in accordance with Claim 1, **characterized in that** the base part (124) of the respective directly driven mounting means (112a) is in contact with the base part (124) of the indirectly driven mounting means (112b).

3. A conveyor device in accordance with either of Claims 1 or 2, **characterized in that** the movement of the respective directly driven mounting means (112a) is transmitted to at least two indirectly driven mounting means (112b).

4. A conveyor device in accordance with any of the Claims 1 to 3, **characterized in that** the drive device (206) comprises a friction wheel drive.

5. A conveyor device in accordance with any of the Claims 1 to 4, **characterized in that** the conveyor comprises at least one braking mechanism (218), by means of which at least one respective mounting means (112) moving in the direction of conveyance (120) is adapted to be braked.

6. A conveyor device in accordance with Claim 5, **characterized in that** the braking mechanism (218) comprises a friction wheel brake.

7. A conveyor device in accordance with any of the Claims 1 to 6, **characterized in that** the mounting means (112) are advanced through the conveyor in circulating manner.

8. A conveyor device in accordance with any of the Claims 1 to 7, **characterized in that** the conveyor comprises a lifting station (118) for lifting the mounting means (112) and/or a lowering station (110) for lowering the mounting means (112).

9. A conveyor device in accordance with any of the Claims 1 to 8, **characterized in that** at least one roller (136) is arranged on the base part (124) of a mounting means (112), said roller rolling on a running rail (174) during the movement of the mounting means (112) in the direction of conveyance (120).

10. A conveyor device in accordance with any of the Claims 1 to 9, **characterized in that** the rotary part (146) of a mounting means (112) comprises at least one guide element (172a, 172b, 172c, 1724), and **in that** the conveyor comprises at least one guide track (176) on which the guide element is guided in such a manner that the rotary part (146) is rotated relative to the base part (124).

11. A conveyor device in accordance with Claim 10, **characterized in that** the rotary part (146) comprises a plurality of guide elements (172a, 172b, 172c, 172d) which are guided successively on the guide track (176) during the rotation of the rotary part (146).

12. A conveyor device in accordance with Claim 11, **characterized in that** the guide track (176) comprises a plurality of guide track sections (210a, 210b, 210c, 210d) that succeed one another in the direction of conveyance (120), a respective one of the guide elements (172a, 172b, 172c, 172d) being guided on said sections during the rotation of the rotary part (146).

13. A conveyor device in accordance with Claim 12, **characterized in that** the guide track sections (210a, 210b, 210c, 210d) that succeed one another in the direction of conveyance (120) are mutually spaced in the direction of conveyance (120).

14. A conveyor device in accordance with any of the Claims 11 to 13, **characterized in that** the guide elements (172a, 172b, 172c, 172d) are arranged in such a manner that the angular spacings between neighbouring guide elements taken with reference to the axis of rotation (166) of the rotary part (146) comprise at least two different values.

## Revendications

1. Dispositif transporteur servant à transporter des pièces d'usinage, en particulier des carrosseries de véhicules (104), à travers une zone de traitement (108) en vue du traitement de surface des pièces d'usinage,
comprenant un convoyeur qui entre dans la zone de traitement (108) les pièces d'usinage respectivement maintenues sur une fixation (112), les transporte à travers la zone de traitement (108) et les ressort de la zone de traitement (108),
**caractérisé**
- **en ce que** les fixations (112) comprennent, respectivement, une partie de base (124) se déplaçant par translation le long d'une direction de transport (120) et une partie pivotante (146) sur laquelle est disposée la pièce d'usinage et laquelle est maintenue, en rotation, sur la partie de base (124), et
- **en ce que** le convoyeur comprend au moins un dispositif d'entraînement (206) au moyen duquel à chaque fois au moins une fixation (112a) entraînée directement peut être entraînée directement pour effectuer un mouvement le long de la direction de transport (120), où le mouvement de la fixation (112a) entraînée directement est transmis, par contact de la fixation entraînée directement avec au moins une fixation (112b) entraînée indirectement, à la fixation entraînée indirectement.

2. Dispositif transporteur selon la revendication 1, **caractérisé en ce que** la partie de base (124) de la fixation (112a) respectivement entraînée directement est en contact avec la partie de base (124) de la fixation (112b) entraînée indirectement.

3. Dispositif transporteur selon la revendication 1 ou 2, **caractérisé en ce que** le mouvement de la fixation (112a) respectivement entraînée directement est transmis à au moins deux fixations (112b) entraînées indirectement.

4. Dispositif transporteur selon l'une quelconque des revendications 1 à 3, **caractérisé en ce que** le dispositif d'entraînement (206) comprend un entraînement par friction.

5. Dispositif transporteur selon l'une quelconque des revendications 1 à 4, **caractérisé en ce que** le convoyeur comprend au moins un dispositif de freinage (218) au moyen duquel peut être freinée à chaque fois au moins une fixation (112) se déplaçant le long de la direction de transport (120).

6. Dispositif transporteur selon la revendication 5, **caractérisé en ce que** le dispositif de freinage (218) comprend un frein de roue à frottement.

7. Dispositif transporteur selon l'une quelconque des revendications 1 à 6, **caractérisé en ce que** les fixations (112) sont transportées, en circuit, dans le convoyeur.

8. Dispositif transporteur selon l'une quelconque des revendications 1 à 7, **caractérisé en ce que** le convoyeur comprend un poste de relevage (118) pour relever les fixations (112) et/ou un poste de descente (110) pour les descendre.

9. Dispositif transporteur selon l'une quelconque des revendications 1 à 8, **caractérisé en ce que**, sur la partie de base (124) d'une fixation (112) est disposé au moins un galet de roulement (136) qui, lors du mouvement de la fixation (112) le long de la direction de transport (120), roule sur un rail de roulement (174).

10. Dispositif transporteur selon l'une quelconque des revendications 1 à 9, **caractérisé en ce que** la partie pivotante (146) d'une fixation (112) comprend au moins un élément de guidage (172a, 172b, 172c, 172d) et **en ce que** le convoyeur comprend au moins une glissière de guidage (176) sur laquelle l'élément de guidage est guidé de manière telle, que la partie pivotante (146) soit tournée par rapport à la partie de base (124).

11. Dispositif transporteur selon la revendication 10, **caractérisé en ce que** la partie pivotante (146) comprend plusieurs éléments de guidage (172a, 172b, 172c, 172d) qui, au cours de la rotation de la partie pivotante (146), sont guidés successivement sur la glissière de guidage (176).

12. Dispositif transporteur selon la revendication 11, **caractérisé en ce que** la glissière de guidage (176) comprend plusieurs parties de glissière de guidage (210a, 210b, 210c, 210d) qui se suivent le long de la direction de transport (120), parties de la glissière de guidage sur lesquelles est guidé à chaque fois l'un des éléments de guidage (172a, 172b, 172c, 172d), au cours de la rotation de la partie pivotante (146).

13. Dispositif transporteur selon la revendication 12, **caractérisé en ce que** les parties de la glissière de guidage (210a, 210b, 210c, 210d), qui se suivent le long de la direction de transport (120), sont espacées les unes des autres le long de la direction de transport (120).

14. Dispositif transporteur selon l'une quelconque des revendications 11 à 13, **caractérisé en ce que** les éléments de guidage (172a, 172b, 172c, 172d) sont disposés de manière telle, que les distances angulaires d'éléments de guidage voisins l'un de l'autre présentent au moins deux valeurs différentes par rapport à l'axe de rotation (166) de la partie pivotante (146).
